# EUROPÄISCHE PATENTSCHRIFT

(11) **EP 1 340 930 B1**
(45) Veröffentlichungstag und Bekanntmachung des Hinweises auf die Patenterteilung: **23.11.2005**
(21) Anmeldenummer: 02004594.4
(22) Anmeldetag: 28.02.2002
(51) Int. Cl.: F16H 63/30, F16D 1/08

(54) **Getriebe mit hydraulischen Klemmkörpern**
Transmission with hydraulic wedging bodies
boîte de vitesses avec corps de coincement hydraulique

(43) Veröffentlichungstag der Anmeldung: 03.09.2003
(73) Patentinhaber: Ford Global Technologies, LLC, Dearborn, MI 48126 (US)
(72) Erfinder: Tropp, Axel Erwin, 53639 Königswinter (DE)
(74) Vertreter: Drömer, Hans-Carsten

(56) Entgegenhaltungen:
- DE-A- 19 512 642
- GB-A- 2 341 436
- US-A- 3 663 027
- US-A- 5 855 446
- PATENT ABSTRACTS OF JAPAN vol. 017, no. 534 (M-1486), 27. September 1993 (1993-09-27) & JP 05 141491 A (YOSHINORI SUGITA), 8. Juni 1993 (1993-06-08)

## Beschreibung

Die Erfindung bezieht sich auf ein Getriebe mit wenigstens einer Welle zur Aufnahme von entsprechenden Zahnrädern der einzelnen Getriebestufen mit einer Einrichtung zur hydraulischen Verbindung der Welle mit den Zahnrädern, umfassend wenigstens einen mit der Welle einerseits und mit den entsprechenden Zahnrädern der jeweiligen Getriebestufe andererseits zusammenwirkenden Klemmkörper, gemäß dem Oberbegriff des Anspruchs 1.

Aus dem Stand der Technik sind verschiedene Getriebeschaltungen oder vergleichbare Anordnungen bekannt, die mit einer Einrichtung zur hydraulischen Verbindung der Wellen und Zahnräder des Getriebes versehen sind. So ist z.B. aus der WO 98/46896 eine hydraulische Spanneinrichtung zur Verbindung einer Welle und einer eine Nabe aufweisenden Vorrichtung bekannt, bei der zwei dehnbare Hülsen, die an wenigstens einem ihrer Enden verbunden sind und die in dem zwischen diesen Hülsen liegenden Raum eine allseits umgebende Aufnahme bilden, durch welche eine Aufnahme für ein Druckmedium gebildet wird, mit einem hydraulischen Medium gefüllt werden. Die hydraulische Spanneinrichtung weist weiterhin Mittel zur internen oder externen Einpressung des Druckmediums in die besagte Aufnahme zwischen den beiden Hülsen auf, und diese Hülsen besitzen eine Materialstärke, die in Abhängigkeit der beiden Hülsendurchmesser bestimmt wird und dünner ist als bei den vorher bekannten Ausführungsformen, so daß insgesamt eine bessere Druckverteilung und damit eine gute zentrische Verbindung von Welle und Nabe und bessere Funktionseigenschaften erzielt werden. Dabei wird das Material derart gewählt, daß dennoch die Spanneinrichtung nur eine begrenzte Drehbewegung zwischen Welle und Nabe im Falle des Auftretens eine hohen Drehmomentes erlaubt. Außerdem soll eine Reduzierung der Bauteilgröße erzielt werden.

Weiterhin ist aus der US-PS 5 855 446 eine hydraulische Spanneinrichtung bekannt, mit einer doppelwandigen Hülse, einem hydraulischen Druckmedium, das in eine zwischen den Hülsenwänden angeordnete Aufnahme eingebracht wird, und einer Einrichtung zur Einbringung des Druckmediums unter Druck. Eine oder beide der Hülsenwände sind dabei zur radial nach außen und/ oder innen gerichteten Ausdehnung ausgebildet, wenn das Druckmedium eingebracht wird, wodurch die Spanneinrichtung gegen eine Welle, eine Nabe oder eine ähnliche Einrichtung, insb. gegen eine rotierende Welle, geklemmt wird. Es ist dabei die Kammer für das Druckmedium mit einwärts winkelig oder sigma- förmig geformten Spannenden ausgebildet, so daß sich diese Enden in einem ersten Schritt aufstellen, wenn die Spanneinrichtung mit Druck beaufschlagt wird, wodurch die axialen Enden der Spanneinrichtung gegen die Welle gedrückt werden, wodurch ein Anlegen der Spanneinrichtung an die Welle erreicht wird, bevor die dazwischenliegenden Bereiche der Hülse gegen die Welle gepresst werden. Durch eine solche Ausbildung wird insb. ein Auftreten einer Schrägstellung z.B. eines Schneidwerkzeuges, eines Sägeblattes od. dgl. auf einer Welle vermieden bzw. diese wird beim Festklemmen sofort korrigiert, wodurch insb. das Auftreten von Vibrationen, ein Schlagen des Werkzeuges od. dgl. vermindert bzw. vermieden wird. Daraus ergibt sich insb. auch z.B. ein verbessertes Schneidergebnis.

Aus der DE196 37 490 C1 ist weiterhin eine Vorrichtung zur Überwachung des Öldruckes z.B. einer Kupplung eines großen Walzwerkes bekannt, wobei diese Kupplung zum Verbinden einer Welle mit einer Nabe vorgesehen ist. Diese Kupplung umfaßt einen Ringspalt in der Nabe, der Ringspalt ist an eine Druckmediumquelle anschließbar, es ist ein Klemmkörper vorgesehen, der von einem Hüllkörper berührend umschlossen ist, der Klemmkörper weist einen Kanal auf, der mit dem Ringspalt in leitender Verbindung steht und über den Klemmkörper bei Druckbeaufschlagung gegen den Hüllkörper anpreßbar ist; weiterhin ist eine Feder vorgesehen, die auf den Hüllkörper einwirkt, und die das Bestreben hat, den Hüllkörper vom Klemmkörper abzuziehen. Es soll durch eine derartige Ausbildung der Kupplung erreicht werden, daß der Druck zwischen den Klemmflächen jederzeit zuverlässig überwacht und angezeigt werden kann, so daß bei Druckausfall entsprechende Maßnahmen getroffen werden können, um ein Fressen der beteiligten Bauteile z.B. eines Walzwerkes zu verhindern.

Mit der aus der US 3663027 bekannten hydraulischen Spannvorrichtung wird ebenfalls mittels einer elastischen Hülse eine Verspannung zwischen einer Welle und einer Nabe erzeugt. Dabei dehnt sich die Hülse bevorzugt in axialer oder radialer Richtung der auf der Hülse angeordneten Reibfläche, indem die entsprechenden Flanken durch ihre gebogene Formgebung diese Dehnung bei Druckbeaufschlagung der Hülse stützen.

Die DE 19512642 beschreibt ein Schaltgetriebe mit einer hydraulischen Spannvorrichtung gemäß dem Oberbegriff des Anspruchs 1. Auf der Welle sind über im Umfang angebrachten Ölversorgungsnuten mehrere elastisch dehnbare Membranen mit Reibflächen angeordnet. Die Reibflächen wirken mit der Innenbohrung von Ganzahnrädem zusammen, die im Normalfall auf den Reibflächen frei drehbar angeordnet sind. Zum Schalten eines Ganges wird eine elastische Membran mit Druck in der Ölversorgungsnut beaufschlagt. Die Membran dehnt sich radial aus und bewirkt so den Formschluß zwischen der Welle und dem Zahnrad, welches auf der zur Membran gehörigen Reibfläche angeordnet ist.

Bei diesen bekannten Getriebeschaltungen mit Einrichtungen zur hydraulischen Verbindung der Wellen und Zahnräder des Getriebes ist insb. die sehr eingeschränkte und spezielle Funktionsweise nachteilig, wünschenswert ist hier eine weitergehende Modifikation dieser Funktionsweise.

Ausgehend von diesen bekannten Getriebeschaltungen liegt der Erfindung die Aufgabe zugrunde, die bekannten Anordnungen unter Beibehaltung der bisherigen Vorteile in der Weise zu verbessern bzw. weiterzuentwickeln, daß eine weitgehende Modifikation insb. der Funktionsweise erreicht wird, um dadurch insb. einen einfacheren und von den Dimensionen her verringerten Aufbau des Getriebes zu erzielen, um dadurch auch eine einfachere und preisgünstigere Herstellung als bisher zu ermöglichen. Die gewünschte Anordnung soll auch hinsichtlich der Funktionseigenschaften verbessert werden und variabler als bisher eingesetzt werden können.

Die Aufgabe wird erfindungsgemäß gelöst mit den Merkmalen des Anspruchs 1. Auf diese Weise wird durch die erfindungsgemäß erreichte Modifikation insb. der Funktionsweise erstmalig mit einfachen Mitteln die Möglichkeit geschaffen, eine Getriebekonstruktion auszubilden, die gegenüber den bekannten Anordnungen eine Reihe von Vorteilen hat:

Es ergibt sich bei der erfindungsgemäßen Anordnung insb. ein wesentlich einfacherer und von den Dimensionen her verringerter Aufbau, es ergibt sich insb. eine verringerte Getriebegröße bzw. es lassen sich mehr Getriebestufen als bisher auf gleichem Bauraum zusammenfassen. Durch die Ausbildung eines hydraulisch dehnbaren Klemmkörpers lassen sich eine Reihe von Funktionen zusammenfassen und es können wesentlich einfachere Zahnräder für das Getriebe verwendet werden. Bei der erfindungsgemäßen Anordnung wird z.B. unter jedem losen Zahnrad einer Getriebestufe ein hydraulisch, im elastischen Bereich dehnbarer Klemmkörper angebracht, welcher sich durch Füllen mit Drucköl dehnt, um dadurch die Welle und das Zahnrad reibschlüssig miteinander zu verbinden. Es wird also die Schaltung eines stufigen Getriebes von einer bisher üblichen kraftschlüssigen Verbindung Welle - Zahnrad auf eine reibschlüssige Verbindung umgestellt. Dabei ist es durch den sich ab- und aufbauenden Reibschluß beim Schalten von einer Getriebestufe zur nächsten nicht mehr notwendig, eine Schaltkupplung zu betätigen, es kann vielmehr unter Last geschaltet werden. Es ergibt sich dadurch eine Verwendung von wesentlich einfacheren Zahnrädern und somit eine vereinfachte Zahnradbearbeitung, da keine Zähne mehr zum Schalten notwendig sind. Weitere Vorteile der erfindungsgemäßen Ausbildung ergeben sich weiterhin insb. bei der Betrachtung der verschiedenen Ausführungsformen.

Bei der bevorzugten Ausführungsform der vorliegenden Erfindung ist die Getriebeschaltung mit dem hydraulisch dehnbaren Klemmkörper zur Anwendung als Synchronisiereinrichtung für das Getriebe vorgesehen. In diesem Falle entfallen weitere, oftmals sehr komplex ausgebildete weitere Bauelemente für die Getriebesynchronisierung.

Nach einem weiteren Ausgestaltungsmerkmal der vorliegenden Erfindung ist die Getriebeschaltung mit dem hydraulisch dehnbaren Klemmkörper zur Anwendung als Schalteinrichtung für das Getriebe unter Last vorgesehen. In diesem Falle sind keine Schaltkupplungen erforderlich, die z.B. in einem Doppelkupplungsgetriebe einen aufwendigen Aufbau haben können, es stellt vielmehr der Klemmkörper selbst die Schaltkupplung dar.

Nach einem weiteren Merkmal der vorliegenden Erfindung ist die Getriebeschaltung mit dem hydraulisch dehnbaren Klemmkörper zur Anwendung als Anfahrkupplung vorgesehen. Die Kupplungsfunktionen werden entsprechend dem vorherigen Ausführungsbeispiel von dem Klemmkörper übernommen.

Es empfiehlt sich, daß der hydraulisch dehnbare Klemmkörper als im wesentlichen ringförmiges Rohrelement ausgebildet ist. Es ist dabei zweckmäßig der hydraulisch dehnbare Klemmkörper als im wesentlichen ringförmiges, dünnwandiges Rechteckrohr ausgebildet; es läßt sich dieses in einfacher Weise auf die entsprechende Welle des Getriebes aufschrumpfen.

Nach einem weiteren Merkmal der vorliegenden Erfindung empfiehlt es sich, daß der hydraulisch dehnbare Klemmkörper einteilig ausgebildet ist.

Nach einem weiteren Vorschlag der vorliegenden Erfindung weist der als im wesentlichen ringförmiges Rohrelement ausgebildete hydraulisch dehnbare Klemmkörper an seiner Innenseite Bohrungen zu seiner Beaufschlagung mit Drucköl auf. Dabei empfiehlt sich, daß die wenigstens eine zur Aufnahme der entsprechenden Zahnräder der einzelnen Getriebestufen vorgesehene Welle Mittel zur Beaufschlagung des jeweiligen Klemmkörpers mit Drucköl aufweist. Diese Mittel der wenigstens einen Welle zur Beaufschlagung des jeweiligen Klemmkörpers mit Drucköl können bevorzugt als in der Welle befindliche umlaufende Nut ausgebildet sein. Beim Beaufschlagen des Klemmkörpers mit Drucköl über diese umlaufende Nut durch die Bohrungen dehnt sich dieser Klemmkörper und verklemmt das jeweilige Zahnrad und die Welle miteinander.

Nach einem weiteren Merkmal der vorliegenden Erfindung ist die zur Beaufschlagung des jeweiligen Klemmkörpers mit Drucköl erforderliche Ölpumpe als Axial- oder Radialkolbenpumpe ausgebildet, die vorzugsweise kleinvolumig ausgebildet sein kann. Zweckmäßig wird dabei zum Antrieb der vorzugsweise als Axial- oder Radialkolbenpumpe ausgebildeten Ölpumpe in der wenigstens einen vorzugsweise hohl ausgebildeten Welle des Getriebes eine Innenwelle ausgebildet sein, die z.B. mit dem Motor direkt verbunden ist. Die Ölpumpe wird also durch diese Innenwelle in der Welle des Getriebes direkt vom Motor angetrieben. Somit steht bei sich drehendem Motor Öldruck zum Schalten zur Verfügung.

Zweckmäßig ist es außerdem, daß zur Beaufschlagung der entsprechenden Klemmkörper der jeweiligen Zahnräder der einzelnen Getriebestufen in der wenigstens einen, vorzugsweise hohl ausgebildeten Welle des Getriebes wenigstens ein Schaltschieber angeordnet ist.

Die Erfindung ist in den Figuren der Zeichnung in mehreren Ausführungsbeispielen dargestellt. Es zeigen:
- Fig. 1: eine weggebrochene Teilansicht im Schnitt einer ersten Ausführungsform des erfindungsgemäßen Getriebes,
- Fig. 2: eine weggebrochene Teilansicht im Schnitt einer zweiten Ausführungsform des erfindungsgemäßen Getriebes,
- Fig.3: eine weggebrochene Teilansicht im Schnitt einer nicht beanspruchten Ausführungsform eines Getriebes,
- Fig. 4: eine weggebrochene Teilansicht im Schnitt durch ein Getriebe mit einer erfindungsgemäßen Getriebeschaltung.

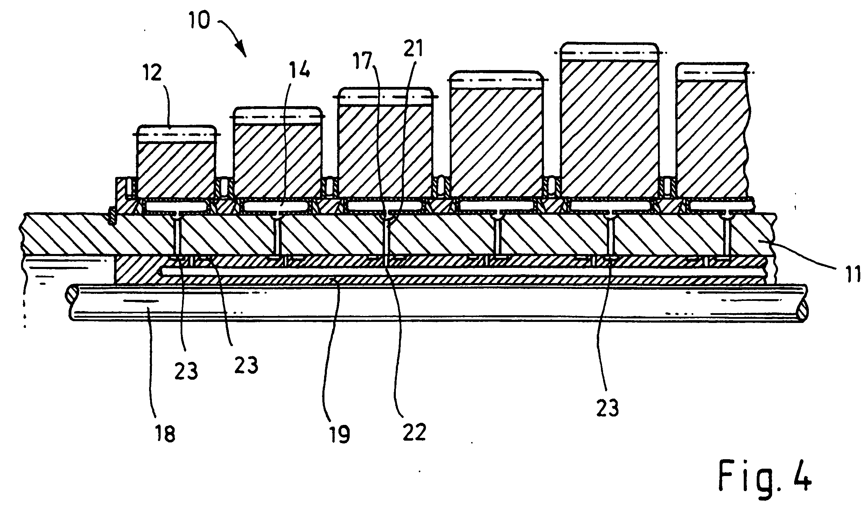

Die erfindungsgemäße Getriebeschaltung ist generell mit 10 bezeichnet. Diese Getriebeschaltung10 ist vorgesehen für ein wenigstens eine Welle 11 zur Aufnahme von den entsprechenden Zahnrädern 12 der einzelnen Getriebestufen aufweisendes Getriebe. Es ist dazu in der Fig. 4 der Zeichnung beispielhaft ein Aufbau eines Getriebes mit einer erfindungsgemäßen Getriebeschaltung 10 dargestellt. Die erfindungsgemäße Getriebeschaltung 10 weist eine Einrichtung 13 zur hydraulischen Verbindung der wenigstens einen Welle 11 mit den Zahnrädern 12 des Getriebes auf, sie umfaßt weiterhin wenigstens einen mit der Welle 11 einerseits und mit den entsprechenden Zahnrädern 12 der jeweiligen Getriebestufe andererseits zusammenwirkenden Klemmkörper 14.

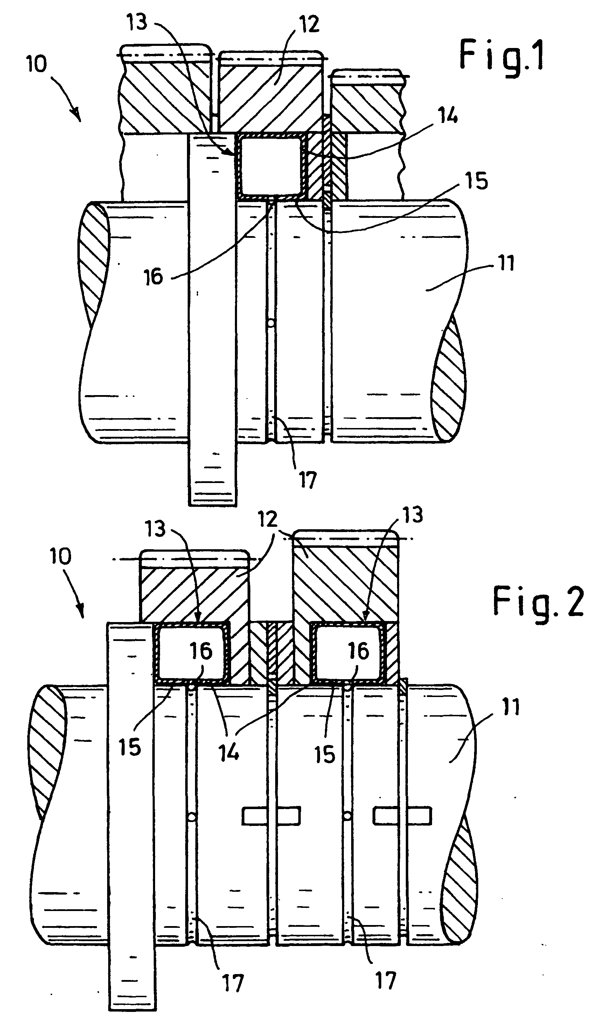

Die Getriebeschaltung 10 ist erfindungsgemäß derart ausgebildet, siehe z.B. die Fig. 1 der Zeichnung, daß die Einrichtung 13 zur hydraulischen Verbindung der wenigstens einen Welle 11 mit den Zahnrädern 12 des Getriebes als wenigstens ein unter den entsprechenden Zahnrädern 12 der jeweiligen Getriebestufen angeordneter, hydraulisch insbesondere im elastischen Bereich dehnbarer Klemmkörper 14 ausgebildet ist. Es ist dazu in der Fig. 1 ein auf einer Welle 11 über einen Klemmkörper 14 festgelegtes Zahnrad 12 dargestellt, wobei zur Lagerung des Klemmkörpers 14 bzw. des Zahnrades 12 an sich bekannte Anschläge, Axiallager und ein Sicherungsring dargestellt sind. Die benachbarten Zahnräder sind ebenfalls angedeutet. Bei dieser Ausführungsform ist der Klemmkörper 14 auf die Welle 11 aufgeschrumpft, weiterhin ergeben sich zu den beiden Seiten des Klemmkörpers 14 und nach oben hin die wirksamen Reibflächen, d.h. die Expansionsrichtungen bestehen hier in axialer und radialer Richtung. Mit dieser Ausbildung wird eine Modifikation insb. der Funktionsweise des Getriebes erreicht; durch die Ausbildung eines hydraulisch dehnbaren Klemmkörpers 14 lassen sich eine Reihe von Funktionen zusammenfassen und es können wesentlich einfachere Zahnräder 12 für das Getriebe verwendet werden. Bei der erfindungsgemäßen Anordnung wird dabei z.B. unter jedem losen Zahnrad 12 einer Getriebestufe ein hydraulisch, im elastischen Bereich dehnbarer Klemmkörper 14 angebracht, welcher sich durch Füllen mit Drucköl dehnt, um dadurch die Welle 11 und das Zahnrad 12 reibschlüssig miteinander zu verbinden. Es wird also die Schaltung eines stufigen Getriebes von einer bisher üblichen kraftschlüssigen Verbindung Welle 11 - Zahnrad 12 auf eine reibschlüssige Verbindung umgestellt. Dabei ist es durch den sich ab- und aufbauenden Reibschluß beim Schalten von einer Getriebestufe zur nächsten nicht mehr notwendig, eine Schaltkupplung zu betätigen, es kann vielmehr unter Last geschaltet werden. Es ergibt sich dadurch eine Verwendung von wesentlich einfacheren Zahnrädern 12 und somit eine vereinfachte Zahnradbearbeitung, da keine Zähne mehr zum Schalten notwendig sind. Im weiteren ergibt sich durch das Zusammenfassen verschiedener Funktionen insb. ein wesentlich einfacherer und von den Dimensionen her verringerter Aufbau, es ergibt sich hier insb. eine verringerte Getriebegröße bzw. es lassen sich mehr Getriebestufen als bisher auf gleichem Bauraum zusammenfassen.

Die erfindungsgemäße Getriebeschaltung 10 hat gegenüber den bekannten Anordnungen eine Reihe von weiteren Vorteilen, die nachfolgend bei der Betrachtung der verschiedenen Ausführungsformen ersichtlich werden. Es ist bei der bevorzugten Ausführungsform der vorliegenden Erfindung die Getriebeschaltung 10 mit dem hydraulisch dehnbaren Klemmkörper 14 zur Anwendung als Synchronisiereinrichtung für das Getriebe vorgesehen; in diesem Falle entfallen weitere, oftmals sehr komplex ausgebildete weitere Bauelemente für die Getriebesynchronisierung. Bei einer anderen Anwendung ist die Getriebeschaltung 10 mit dem hydraulisch dehnbaren Klemmkörper 14 zur Anwendung als Schalteinrichtung für das Getriebe unter Last vorgesehen. In diesem Falle sind keine Schaltkupplungen erforderlich, die einen aufwendigen Aufbau haben können, es stellt vielmehr der Klemmkörper 14 selbst die Schaltkupplung dar. Bei einer weiteren Anwendung ist die Getriebeschaltung 10 mit dem hydraulisch dehnbaren Klemmkörper 14 zur Anwendung als Anfahrkupplung vorgesehen. In diesem Falle werden die Kupplungsfunktionen ebenfalls von dem Klemmkörper 14 übernommen.

Nachfolgend wird nun auf die Ausbildung des hydraulisch dehnbaren Klemmkörpers 14 eingegangen, es wird dazu insb. auf die Ausführungsformen gemäß den Fig. 1 und 2 der Zeichnung verwiesen. Dieser hydraulisch dehnbare Klemmkörper 14 ist vorzugsweise als im wesentlichen ringförmiges Rohrelement ausgebildet, bei den Ausführungsformen gemäß den Fig. 1 und 2 der Zeichnung ist der hydraulisch dehnbare Klemmkörper 14 als im wesentlichen ringförmiges, dünnwandiges Rechteckrohr 15 ausgebildet, welches sich in einfacher Weise auf die entsprechende Welle 11 des Getriebes aufschrumpfen läßt. Der hydraulisch dehnbare Klemmkörper 14 kann dabei z.B. einteilig ausgebildet sein. Es sind dazu in der Fig. 2 zwei auf einer Welle 11 über jeweils einen Klemmkörper 14 festgelegte Zahnräder 12 dargestellt, wobei auch hier zur Lagerung der Klemmkörper 14 bzw. Zahnräder 12 an sich bekannte Anschläge, Axiallager und Sicherungsringe dargestellt sind. Auch bei dieser Ausführungsform sind die Klemmkörper 14 auf die Welle 11 aufgeschrumpft, es ergeben sich auch hier zu den beiden Seiten der Klemmkörper 14 und nach oben hin die wirksamen Reibflächen, d.h. die Expansionsrichtungen bestehen wiederum in axialer und radialer Richtung.

Der als im wesentlichen ringförmiges Rohrelement, hier als im wesentlichen ringförmiges, dünnwandiges Rechteckrohr 15 ausgebildete hydraulisch dehnbare Klemmkörper 14 weist an seiner Innenseite Bohrungen 16 zu seiner Beaufschlagung mit Drucköl auf. Die wenigstens eine zur Aufnahme der entsprechenden Zahnräder 12 der einzelnen Getriebestufen vorgesehene Welle 11 weist entsprechend Mittel zur Beaufschlagung des jeweiligen Klemmkörpers 14 mit Drucköl auf, es sind diese Mittel bei den dargestellten Ausführungsformen als in der Welle 11 befindliche umlaufende Nut 17 ausgebildet. Beim Beaufschlagen des Klemmkörpers 14 mit Drucköl über diese umlaufende Nut 17 durch die Bohrungen 16 dehnt sich dieser Klemmkörper 14 und verklemmt das jeweilige Zahnrad 12 und die Welle 11 miteinander. Es kann dabei die durch den Schlupf beim Schalten freiwerdende Wärme über das Zahnrad 12 abgeführt werden, da der Klemmkörper 14 sich mit der Reibseite vollflächig anlegt. Bei geeignetem Spiel zwischen Zahnrad 12 und Klemmkörper 14 kann das Zahnrad t2 bei nicht gedehntem Klemmkörper 14 auf diesem gleitend gelagert werden, dabei ist für eine geeignete Ölzufuhr zu sorgen. Dieses kann z.B. ebenfalls über die umlaufende Nut 17 der Welle 11 erfolgen.

Die zur Beaufschlagung des jeweiligen Klemmkörpers 14 mit Drucköl erforderliche Ölpumpe kann als Axial- oder Radialkolbenpumpe ausgebildet sein, die vorzugsweise kleinvolumig ausgebildet sein wird. Eine solche Axial- oder Radialkolbenpumpe ist für diese Anwendung vollkommen ausreichend. So hat sich gezeigt, daß ein Klemmkörper 14 aus Stahl bei einem Dₐ von 70 mm und einer Breite von 20 mm sowie einem Spalt von 0,1 mm zwischen Klemmkörper 14 und Zahnrad 12 und 1 mm Wandstärke ca. 172 bar benötigt, um sich bis auf Anlage zu dem Zahnrad 12 zu dehnen. Eine weitere Drucksteigerung um 81 bar ist notwendig, um ein Drehmoment von 250 Nm zu übertragen. Um eine sichere Übertragung auch von Drehmomentstößen zu gewährleisten, würde man in diesem Fall mit ca. 300 bar Gesamtdruck arbeiten. Da dabei zum Dehnen der Klemmkörper 14 nur minimale Volumen notwendig sind, ist entsprechend die für die Druckölpumpe notwendige Leistung sehr gering.

Zum Antrieb der vorliegend als Axial- oder Radialkolbenpumpe ausgebildeten Ölpumpe ist in der wenigstens einen vorzugsweise hohl ausgebildeten Welle 11 des Getriebes eine Innenwelle 18 ausgebildet, die z.B. mit dem Motor direkt verbunden sein kann. Die Ölpumpe wird dann durch diese Innenwelle 18 in der Welle 11 des Getriebes direkt vom Motor angetrieben. Somit steht bei sich drehendem Motor Öldruck zum Schalten zur Verfügung. Es kann dabei über 2 Freiläufe und eine Zahnradstufe ein Antrieb der Ölpumpe sowohl von z.B. der Getriebeabtriebswelle als auch vom Motor erfolgen. Es steht dann ein Öldruck zum Schalten schon beim Fahren des Fahrzeuges ohne laufenden Motor an.

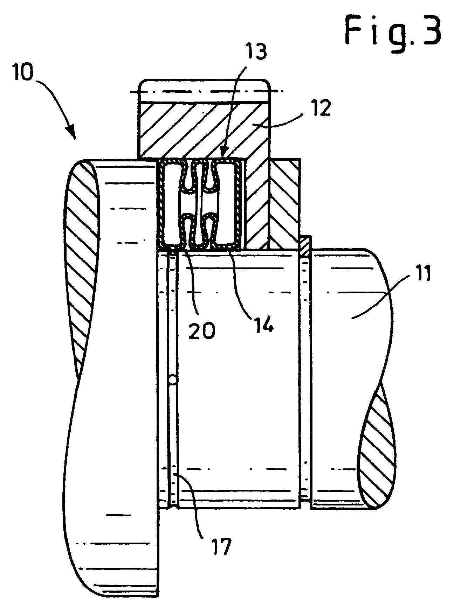

Zur Beaufschlagung der entsprechenden Klemmkörper 14 der jeweiligen Zahnräder 12 der einzelnen Getriebestufen ist, siehe Fig. 4 der Zeichnung, in der wenigstens einen, vorzugsweise hohl ausgebildeten Welle 11 des Getriebes ein Schaltschieber 19 angeordnet. Der hydraulisch dehnbare Klemmkörper 14 kann im wesentlichen in axialer Expansionsrichtung dehnbar ausgebildet sein, siehe Fig. 3 der Zeichnung, bei einer erfindungsgemäßen Ausführungsform ist der hydraulisch dehnbare Klemmkörper 14 im wesentlichen in axialer und/ oder radialer Expansionsrichtung dehnbar ausgebildet, siehe z.B. die Ausführungsformen gemäß den Figuren 1 und 2 der Zeichnung. Bei der Ausführungsform gemäß Fig. 3 ist der hydraulisch dehnbare Klemmkörper 14 als im wesentlichen ringförmiges, dünnwandiges, rechteckförmiges Wellrohr 20 ausgebildet. Diese nicht beanspruchte Ausgestaltung empfiehlt sich z.B. dann, wenn die Dehnung bevorzugt in eine Richtung erfolgen soll, es erfolgt dies hier, wie erwähnt, in axialer Richtung. In Fig. 3 ist dazu, ähnlich der Fig. 1, ein auf einer Welle 11 über einen, in diesem Falle als im wesentlichen ringförmiges, dünnwandiges, rechteckförmiges Wellrohr 20 ausgebildeten Klemmkörper 14 festgelegtes Zahnrad 12 dargestellt, wobei zur Lagerung des Klemmkörpers 14 bzw. des Zahnrades 12 wieder an sich bekannte Anschläge, Axiallager und ein Sicherungsring dargestellt sind. Bei dieser Ausführungsform ist wiederum der Klemmkörper 14 auf die Welle 11 aufgeschrumpft, allerdings ergeben sich hier die wirksamen Reibflächen lediglich zu den beiden Seiten des Klemmkörpers 14 hin, d.h. die Expansionsrichtungen bestehen hier nur in axialer Richtung.

In der Fig. 4 der Zeichnung ist wie erwähnt ein Aufbau eines Getriebes mit einer erfindungsgemäßen Getriebeschaltung 10 dargestellt. Es werden dabei die entsprechenden Zahnräder 12 der einzelnen Getriebestufen jeweils über hydraulisch dehnbare Klemmkörper 14 mit der Welle 11 in Wirkverbindung gebracht. Zur Lagerung des Klemmkörpers 14 bzw. der Zahnräder 12 sind wieder an sich bekannte, nicht bezeichnete Anschläge, Axiallager und Sicherungsringe dargestellt, die Klemmkörper 14 selbst sind in dieser Zeichnung nur schematisch dargestellt. Die Welle 11 des Getriebes ist in diesem Falle hohl ausgebildet, wobei innerhalb der Welle 11 der Schaltschieber 19 ausgebildet ist. Weiterhin umfaßt die Welle 11 bei jedem Zahnrad 12 eine umlaufende Nut 17, die jeweils über eine Bohrung 21 in der Welle 11 mit einem Druckölkanal 22 von der Ölpumpe verbunden ist. An der Außenseite des Schaltschiebers 19 können außerdem Entlastungsringkanäle 23 mit Bohrungen in die Schaltschiebermitte vorgesehen sein.

Es ergibt sich durch die erfindungsgemäße Ausbildung insgesamt ein wesentlich einfacherer und von den Dimensionen her verringerter Aufbau, so verringert sich insb. die Getriebegröße bzw. es lassen sich mehr Getriebestufen als bisher auf gleichem Bauraum zusammenfassen. Weiterhin lassen sich eine Reihe von Funktionen zusammenfassen und es können wesentlich einfachere Zahnräder für das Getriebe verwendet werden, da keine Zähne mehr zum Schalten benötigt werden. Bei der Ausführungsform zur Anwendung als Schalteinrichtung für das Getriebe unter Last sind keine Schaltkupplungen erforderlich, es stellt vielmehr der Klemmkörper selbst die Schaltkupplung dar.

Die erfindungsgemäße Anordnung läßt sich auch als Kombination mit einer konventionellen Schaltkupplung oder einem Drehmomentenwandler verwirklichen. Weiterhin ist auch ein Betrieb als Schaltgetriebe mit wahlfreier oder sequentieller Schaltung oder als Automatikgetriebe möglich, wobei insgesamt eine Verbesserung des Wirkungsgrades erzielt wird. Es kann ferner wie gesehen der Schaltschieber wie z.B. Ventilschieber komplett in die Welle 11 des Getriebes integriert werden. Ein weiterer Vorteil der erfindungsgemäßen Anordnung besteht darin, daß bei Aufteilung des Getriebes in eine Schaltwelle, Abtriebswelle vom Motor, und eine Festwelle, Abtriebswelle vom Getriebe, sich aus der Tatsache, das immer gleiche Drehmomente geschaltet werden, die Möglichkeit besteht, die Schaltung aus Gleichteilen aufzubauen.

Wie bereits erwähnt, sind die beanspruchten Ausführungsformen nur beispielsweise Verwirklichungen der Erfindung, diese ist nicht darauf beschränkt, es sind vielmehr noch mancherlei Abänderungen und Ausbildungen möglich. So sind insb. Abwandlungen bzgl. der Ausbildung des hydraulisch dehnbaren Klemmkörpers 14 denkbar, weiterhin vorgesehen ist eine Anwendung bei anderen Arten als den dargestellten Getriebeformen.

## Patentansprüche

1. Getriebe mit einer Welle (11) zur Aufnahme von entsprechenden Zahnrädern (12) einzelner schaltbarer Getriebestufen mit einer Einrichtung (13) zur hydraulischen Verbindung der Welle (11) mit den Zahnrädern (12), umfassend wenigstens einen mit der Welle (11) einerseits und mit den entsprechenden Zahnrädern (12) der jeweiligen Getriebestufe andererseits zusammenwirkenden Klemmkörper (14), wobei die Einrichtung (13) zur hydraulischen Verbindung der Welle (11) mit den Zahnrädern (12) als ein unter den entsprechenden Zahnrädern (12) der jeweiligen Getriebestufe angeordneter, hydraulisch insbesondere im elastischen Bereich dehnbarer Klemmkörper (14) ausgebildet ist,
**dadurch gekennzeichnet, daß**
der hydraulisch dehnbare Klemmkörper (14) als im wesentlichen ringförmiges Rohrelement ausgebildet ist, das in axialer und radialer Expansionsrichtung dehnbar ausgebildet ist,

2. Getriebe nach Anspruch 1,
**dadurch gekennzeichnet, daß**
der hydraulisch dehnbare Klemmkörper (14) als im wesentlichen ringförmiges, dünnwandiges Rechteckrohr (15) ausgebildet ist.

3. Getriebe nach einem der Ansprüche 1 oder 2,
**dadurch gekennzeichnet, daß**
der hydraulisch dehnbare Klemmkörper (14) einteilig ausgebildet ist.

4. Getriebe nach einem der Ansprüche 1 bis 3,
**dadurch gekennzeichnet, daß**
der Klemmkörper (14) an seiner Innenseite Bohrungen (16) zur Beaufschlagung mit Drucköl aufweist.

5. Getriebe nach einem der Ansprüche 1 bis 4,
**dadurch gekennzeichnet, daß**
die Welle (11) Mittel zur Beaufschlagung des jeweiligen Klemmkörpers (14) mit Drucköl aufweist.

6. Getriebe nach Anspruch 5,
**dadurch gekennzeichnet, daß**
die Mittel zur Beaufschlagung des jeweiligen Klemmkörpers (14) mit Drucköl als in der Welle (11) befindliche umlaufende Nut (17) ausgebildet sind.

7. Getriebe nach einem der Ansprüche 1 bis 6,
**dadurch gekennzeichnet, daß**
die zur Beaufschlagung des jeweiligen Klemmkörpers (14) mit Drucköl erforderliche Ölpumpe als Axial- oder Radialkolbenpumpe ausgebildet ist.

8. Getriebe nach einem der Ansprüche 1 bis 7,
**dadurch gekennzeichnet, daß**
zum Antrieb einer bzw. der Ölpumpe in der vorzugsweise hohl ausgebildeten Welle (11) eine Innenwelle (18) ausgebildet ist.

9. Getriebe nach einem der Ansprüche 1 bis 8,
**dadurch gekennzeichnet, daß**
zur Beaufschlagung der entsprechenden Klemmkörper (14) der jeweiligen Zahnräder (12) in der vorzugsweise hohl ausgebildeten Welle (11) wenigstens ein Schaltschieber (19) angeordnet ist.

## Claims

1. Transmission, with a shaft (11) for the reception of corresponding gearwheels (12) of individual shiftable transmission steps, with a device (13) for the hydraulic connection of the shaft (11) to the gearwheels (12), comprising at least one clamping body (14) cooperating with the shaft (11), on the one hand, and with the corresponding gearwheels (12) of the respective transmission step, on the other hand, the device (13) for the hydraulic connection of the shaft (11) to the gearwheels (12) being designed as a clamping body (14) arranged under the corresponding gearwheels (12) of the respective transmission step and extendable hydraulically, particularly in the elastic range, **characterized in that** the hydraulically extendable clamping body (14) is designed as an essentially annular tube element which is designed to be extendable in an axial and a radial expansion direction.

2. Transmission according to Claim 1, **characterized in that** the hydraulically extendable clamping body (14) is designed as an essentially annular thin-walled rectangular tube (15).

3. Transmission according to either one of Claims 1 and 2, **characterized in that** the hydraulically extendable clamping body (14) is of one-part design.

4. Transmission according to one of Claims 1 to 3, **characterized in that** the clamping body (14), on its inside, has bores (16) for action upon it with pressure oil.

5. Transmission according to one of Claims 1 to 4, **characterized in that** the shaft (11) has means for acting upon the respective clamping body (14) with pressure oil.

6. Transmission according to Claim 5, **characterized in that** the means for acting upon the respective clamping body (14) with pressure oil are designed as a peripheral groove (17) located in the shaft (11).

7. Transmission according to one of Claims 1 to 6, **characterized in that** the oil pump required for acting upon the respective clamping body (14) with pressure oil is designed as an axial or radial piston pump.

8. Transmission according to one of Claims 1 to 7, **characterized in that**, for driving an oil pump or the oil pump, an inner shaft (18) is formed in the shaft (11) of preferably hollow design.

9. Transmission according to one of Claims 1 to 8, **characterized in that**, for acting upon the corresponding clamping bodies (14) of the respective gearwheels (12), at least one shift slide (19) is arranged in the shaft (11) of preferably hollow design.

## Revendications

1. Boîte de vitesses avec un arbre (11) destiné à recevoir des roues dentées correspondantes (12) de rapports de transmission sélectionnables individuels, avec un dispositif (13) pour la connexion hydraulique de l'arbre (11) aux roues dentées (12), comprenant au moins un corps de coincement (14) coopérant avec l'arbre (11) d'une part et avec les roues dentées correspondantes (12) du rapport de transmission respectif d'autre part, le dispositif (13) pour la connexion hydraulique de l'arbre (11) aux roues dentées (12) étant réalisé sous la forme d'un corps de coincement (14) disposé sous les roues dentées correspondantes (12) du rapport de transmission respectif, pouvant être étiré hydrauliquement, notamment dans la plage élastique,
**caractérisée en ce que**
le corps de coincement (14) pouvant être étiré hydrauliquement est réalisé sous la forme d'un élément tubulaire essentiellement annulaire, qui est réalisé de manière à pouvoir être étiré dans la direction d'expansion axiale et radiale.

2. Boîte de vitesses selon la revendication 1,
**caractérisée en ce que**
le corps de coincement (14) pouvant être étiré hydrauliquement est réalisé sous la forme d'un tube rectangulaire à parois minces (15), essentiellement annulaire.

3. Boîte de vitesses selon l'une quelconque des revendications 1 ou 2,
**caractérisée en ce que**
le corps de coincement (14) pouvant être étiré hydrauliquement est réalisé en une seule pièce.

4. Boîte de vitesses selon l'une quelconque des revendications 1 à 3,
**caractérisée en ce que**
le corps de coincement (14) présente, sur son côté intérieur, des alésages (16) en vue d'une sollicitation avec de l'huile sous pression.

5. Boîte de vitesses selon l'une quelconque des revendications 1 à 4,
**caractérisée en ce que**
l'arbre (11) présente des moyens pour solliciter le corps de coincement (14) respectif avec de l'huile sous pression.

6. Boîte de vitesses selon la revendication 5,
**caractérisée en ce que**
les moyens pour solliciter le corps de coincement (14) respectif avec de l'huile sous pression sont réalisés sous forme de rainure périphérique (17) située dans l'arbre (11).

7. Boîte de vitesses selon l'une quelconque des revendications 1 à 6,
**caractérisée en ce que**
la pompe à huile nécessaire pour solliciter le corps de coincement (14) respectif avec de l'huile sous pression est réalisée sous forme de pompe à piston radiale ou axiale.

8. Boîte de vitesses selon l'une quelconque des revendications 1 à 7,
**caractérisée en ce qu'**
un arbre interne (18) est réalisé pour l'entraînement d'une ou de la pompe à huile dans l'arbre (11) réalisé de préférence creux.

9. Boîte de vitesses selon l'une quelconque des revendications 1 à 8,
**caractérisée en ce qu'**
au moins une vanne de commande (19) est disposée dans l'arbre (11) réalisé de préférence creux pour la sollicitation du corps de coincement (14) correspondant des roues dentées respectives (12).
